# EUROPEAN PATENT SPECIFICATION

(11) **EP 4 171 987 B1**
(45) Date of publication and mention of the grant of the patent: **18.03.2026**
(21) Application number: 20807523.4
(22) Date of filing: 03.10.2020
(51) Int. Cl.: B60L 7/18, B62K 23/04, B62J 45/413

(54) **A MOTORIZED VEHICLE**
MOTORISIERTES FAHRZEUG
VÉHICULE MOTORISÉ

(30) Priority: 28.06.2020 IN 202041027423
(43) Date of publication of application: 03.05.2023
(73) Proprietor: TVS Motor Company Limited, 600006 Chennai (IN)
(72) Inventor: VENKATESH, Govindan, Chennai, 600 006 (IN); SARAVANAN, Subbiah, Chennai, 600 006 (IN); VISWESWARAN, Munirathinaachari, Chennai, 600 006 (IN); KOMBAN PAULSON, Abel, Chennai, 600 006 (IN); MOHAN, S, Chennai, 600 006 (IN)
(74) Representative: Patentanwaltskanzlei Matschnig & Forsthuber OG
(86) International application number: PCT/IN2020/050850
(87) International publication number: WO 2022/003706

(56) References cited:
- WO-A1-2012/155925
- WO-A1-2013/106479
- WO-A1-2020/044481
- WO-A1-2020/050492
- CN-U- 202 696 256
- DE-A1- 102017 122 848
- DE-A1- 102017 212 609
- JP-A- 2003 137 128
- JP-A- 2009 227 178
- JP-A- 2010 088 154
- JP-A- 2017 065 282
- KR-B1- 101 831 190
- US-A1- 2008 114 523
- US-A1- 2010 042 280
- US-A1- 2010 044 977
- US-A1- 2012 111 137
- US-B2- 6 724 165

## Description

### TECHNICAL FIELD

The present subject matter described herein generally relates to a motorized vehicle, and particularly but not exclusively relates to a throttle assembly of a motorized vehicle.

### BACKGROUND

WO2012155925 discloses the preamble of claim 1. Over the period of time the concept of regenerative braking has become fairly well-known as a method of increasing range in vehicles, especially in hybrid and electric vehicles.

Regenerative braking is an energy recovery mechanism that slows down a moving vehicle or object by converting its kinetic energy into a form that can be either used immediately or stored until needed. In this mechanism, the electric traction motor uses the vehicle's momentum to recover energy that would otherwise be lost to the brake discs as heat. This contrasts with conventional braking systems, where the kinetic energy is converted to heat energy which is dissipated to atmosphere and thus goes as waste energy. In most of the vehicles this unwanted heat energy is generated due to friction present in the brakes and dissipated as heat in resistors.

Conventionally, the regenerative braking uses a vehicle's motor as a generator to convert much of the kinetic energy lost when decelerating back into electrical energy stored in the vehicle's battery. Post that, during acceleration, the vehicle can use much of the energy previously stored from regenerative braking, instead of tapping and depleting its own energy reserves.

### BRIEF DESCRIPTION OF THE DRAWINGS

The detailed description is described with reference to a motorized vehicle along with the accompanying figures. The same numbers are used throughout the drawings to reference like features and components.
**Figure 1** illustrates a side view of a motorized vehicle, for example a two-wheeled vehicle, when viewed from left hand side of the rider while the rider is in riding position.
**Figure 2** illustrates a rear perspective view of a portion of a vehicle in accordance with an embodiment of the present invention.
**Figure 3** illustrates a working flow chart depicting the mechanism used by the throttle assembly to provide user controlled regenerative braking in a motorized vehicle in accordance with an embodiment of the present invention.
**Figure 4** illustrates a partial exploded view of a throttle assembly of a motorized vehicle, exemplifying the constructional changes brought in an existing conventional throttle assembly to provide user controlled regenerative braking in a vehicle in accordance with an embodiment of the present invention.
**Figure 5** illustrates an enlarged view of the first X (shown in Figure 4) throttle assembly of a motorized vehicle, exemplifying the constructional differences from existing conventional throttle assembly in accordance with an embodiment of the present invention.
**Figure 6a to Figure 6c** illustrates the three throttle assembly states of a motorized vehicle in accordance with an embodiment of the present invention.
**Figure 7a to Figure 7c** illustrates the slot engagement with the torsional spring when the throttle assembly is positioned in any of the three throttle assembly states of a motorized vehicle in accordance with an embodiment of the present invention.

### DETAILED DESCRIPTION

Regenerative braking in a vehicle impacts both energy efficiency and braking effectiveness of the vehicle. Approximately 60% to 70% of the kinetic energy lost during the act of braking can be turned back into acceleration with help of regenerative braking. The rest 30% to 40% of the kinetic energy is lost during the process of capturing the kinetic energy and during conversion of that energy back into acceleration.

Similarly, effectiveness of regenerative braking indicates the regenerative braking impact on the range of the vehicle. The effectiveness of regenerative braking varies significantly based on factors including driving conditions, terrain and the vehicle size.

Usually, driving conditions have a large impact on the vehicle, as the rider can witness higher effectiveness for regenerative braking in stop-and-go city traffic than in highway commuting. This is because, repeated braking helps in frequent recapturing of more energy than in a drive where braking is not frequent. Terrain also plays a large role in determining the effectiveness, as uphill driving does not give the rider frequent chances for braking. But during downhill driving braking frequency is relatively more as compared to the uphill driving, resultant to which a large amount of energy can be regenerated. Therefore, on long downhills, the regenerative braking can be used nearly constantly to regulate speed while continuously charging the battery by regeneration.

In addition to improving the overall efficiency of the vehicle, regeneration can significantly extend the life of the braking system as the mechanical parts such as cables and brake pads does not wear out on frequent basis. This is because of the reduced use of the brake pads in the vehicles where regenerative braking is used.

In vehicles, for example, an electric vehicle, the regenerative braking can be achieved through various controlled actuation methods like brake lever/pedal or closing of a throttle assembly.

Conventionally, in most vehicles, the regenerative braking is preprogrammed controlled by a pre-programmed controller. Therefore as soon as the throttle assembly is closed or the brake lever/pedal is applied, the pre-programmed regenerative braking is activated.

During daily commuting activities, there are situations, when the rider may not require same amount of braking, and the rider needs to make a choice on how quick or slow the vehicle should be stopped, depending upon the circumstances in which he is driving. Therefore, while handling a normal braking, the rider gets a response of braking depending upon the actual braking forces that he has transmitted manually. But the same is not the case with the regenerative braking, as it is preprogrammed. The preprogrammed nature of the regenerative braking makes the regenerative braking applied to the vehicle pre fixed, irrespective of the actual requirement of the amount of the braking required, leaving least control with the rider. Thus, in the existing regenerative braking systems, the rider does not get the similar control of the regenerative braking when compared with the normal braking.

In such scenarios the riders' drivability is negatively impacted due to the pre-programmed nature of the regenerative braking, making the overall driving experience unpleasant for the rider. Therefore, in spite of the tuned regenerative braking, a need is felt where the rider looks for an option which allows him to gain full control and feedback of the regenerative braking as and when required by the rider.

Therefore, a requirement of regenerative braking similar to normal braking is felt, which can provide a control option to the rider and further allows the rider to make a choice on how much force is required to stop the vehicle through the regenerative braking.

In cases where the regenerative braking is pre-programmed, every time when the rider closes the throttle assembly, he will have the feeling of pitching, i.e., whenever the throttle assembly is closed by the rider in slow speeds of the vehicle, he will also get the feeling of application of brakes, when actually he has not applied any brake. This pitching feeling felt by the rider, at times, tends to create confusion for the rider which further adversely affects his control over the vehicle.

Also, if the regenerative braking is preprogrammed at high limits or magnitude of throttle change, normal closing of the throttle assembly in city conditions, could lead to a feeling of being pushed forward or harshness feeling. At times if the regenerative braking is too high and not in the predictable limits of the rider, the rider can lose control over the vehicle.

Also at slow speed, the feeling of pitching along with harshness would create vehicle handling issues for the rider leading it to vehicle instability and further create safety issues for the rider.

Moreover, conventionally because of the preprogrammed regenerative braking, when the battery of the vehicle is at its maximum charged limit, the regenerative braking usually does not work. The effect of the regenerative braking is felt by the rider with the gradual depletion of the battery and is felt most by the rider when the battery of the vehicle is on the verge of complete depletion. Thus, the prediction of regeneration by the rider ranging from complete discharged state of the battery to the full battery varies when the regenerative braking is preprogrammed. This variation in response experience and inconsistent feedback also often tends to create confusion for the rider.

Furthermore, conventionally when the rider wants to reduce the speed of the vehicle, rider at first closes the throttle assembly. Then the rider expects the speed of the vehicle to decelerate and then applies brake by means of the brake lever/ pedal present on the vehicle. This control shift from the throttle assembly to the brake lever/pedal is time taking as the time taken by the rider to make the choice of shifting from throttle assembly to the brake lever/pedal can be undesirably high, which further can create safety issues for the rider.

In many vehicles an idle stop start feature is present which identifies the idling of a vehicle for a predetermined period of conditions such as throttle, engine temperature, rpm, speed, distance, time and battery voltage and when the predetermined conditions are met, engine run is stopped.

In such conditions in some vehicles the start of the vehicle is enabled when a predetermined set of conditions such as engine rpm, brake input, vehicle speed, engine temperature and throttle value is met.

And in other vehicles the starting of vehicle is enabled by the combination of throttle opening with brake actuation input. Therefore use of throttle assembly other than acceleration is known.

In other known arts the regenerative braking is primarily preprogrammed or provides a user controlled throttle assembly for a bicycle. Such known art discloses about an electronically controlled throttle. However, as in motorized two wheelers and three wheelers the throttle can also be mechanically controlled and/or cable operated, also the construction of such motorized vehicles is substantially different from the construction of a bicycle, the user controlled throttle assembly disclosed for a bicycle cannot be implemented in such motorized vehicles. Some other known art discloses a solution where the rotation of a throttle assembly in motoring direction causes acceleration of the vehicle, and the rotation of the throttle assembly in opposite direction causes regenerative braking. Therefore, rotating the throttle assembly in one direction to achieve acceleration and rotating the throttle assembly in another direction to achieve braking is known. However, implementing the teachings of such known art has disadvantages such as if regenerative braking torque is produced by the motor when the throttle assembly is rotating back to its home position (after acceleration), the rider could face vehicle instability issues leading to poor vehicle handling and safety risk.

Also, the throttle opening and closing operation vis-à-vis the regenerative braking should be such that it is not counter intuitive to the rider which would lead to panic situations. The regenerative braking should be effected when the throttle is being closed and not when the throttle is being opened. Therefore, the regenerative braking should be introduced such that it is intuitive to the rider and does not lead to panic feeling to the rider.

Hence, there is a need of a throttle assembly controlled regenerative braking system that can be controlled by the rider, and can be implemented in all two wheelers and three wheelers in both cable and sensor based variants of the vehicles. The user controlled throttle assembly controlled regenerative braking also needs to overcome the feeling of harshness and pitching, which is usually felt in preprogrammed regenerative braking, and need to achieve an improved vehicle stability and drive feel.

The present subject matter has been devised in view of the above circumstances as well as solving other problems of known art.

In an embodiment of the present subject matter, the present subject matter relates to a throttle assembly of a motorized vehicle, that provides two modes of operation, viz. a regular drive mode, and a user controlled regenerative mode.

As per an aspect of the present subject matter, the subject matter provides a throttle assembly that includes a handle bar, a first throttle assembly holder, a throttle assembly case holder, and a second throttle assembly holder.

As per another aspect of the present subject matter, the subject matter provides the handle bar as a stationary element of the throttle assembly on which the throttle assembly case holder is mounted.

As per another aspect of the present subject matter, the subject matter provides the throttle assembly case holder as a rotating part of the throttle assembly.

As per another aspect of the present subject matter, the throttle assembly case holder aids in pulling the throttle assembly cable in cable-based variants of the motorized vehicles.

As per another aspect of the present subject matter, the first throttle assembly holder and the second throttle assembly holder aids in holding the throttle assembly case holder and the handle bar together bi-directionally.

As per another aspect of the present subject matter, the throttle assembly of the present subject matter includes a slot, a spring, for example a bidirectional torsional spring, a first spring mount for example a first torsional spring mount, a second mount for example a second torsional spring mount, a stopper ring including a plurality of stoppers and a stopper relieved region on the stopper ring.

As per another aspect of the present subject matter, the subject matter provides a throttle assembly that includes an outward end protruding toward a right side of the vehicle.

As per another aspect of the present subject matter, when viewed from the outward end of the throttle assembly, the throttle assembly is capable of being rotated in both clockwise and anticlockwise direction from a neutral throttle position.

As per another aspect of the present subject matter, the throttle assembly is capable of providing a set of four rotations, viz. a first rotation, a second rotation, a third rotation, and a fourth rotation.

As per another aspect of the present subject matter, the first rotation of the throttle assembly in an anti-clockwise direction from a neutral position increases the throttle, while the second rotation of the throttle assembly in a clockwise direction towards the neutral position decreases the throttle. Similarly, when viewed from the outward end of the throttle assembly, the third rotation of the throttle assembly in a clockwise direction from the neutral position increases the regenerative braking, while the fourth rotation of the throttle assembly in an anti-clockwise direction towards the neutral position decreases the regenerative braking.

As per another aspect of the present subject matter, the rotation of the throttle assembly in both the clockwise direction and the anticlockwise direction by means of the first rotation, the second rotation, the third rotation and a fourth rotation enables the throttle assembly to be in three states. These three states of the throttle assembly include a first state, that is the neutral state of the throttle assembly; a second state that is a when the vehicle is in the regular drive mode; and a third state that is when the vehicle is in the user controlled regenerative mode.

As per another aspect of the present subject matter, the throttle assembly is in the second state that is the vehicle is in the regular drive mode, when the throttle assembly undergoes the first rotation or the second rotation.

As per another aspect of the present subject matter, the throttle assembly is in the third state that is the vehicle is in the user controlled regenerative mode when the throttle assembly undergoes the third rotation or the fourth rotation.

As per another aspect of the present subject matter, the three states of the throttle assembly, viz. the first state, the second state and the third state that aids the rider to control both the speed of the vehicle and the regenerative braking of the vehicle.

As per another aspect of the present subject matter, the throttle assembly in the second state is capable of being rotated up till a first position that is the upper limit of the throttle assembly when the throttle assembly undergoes the first rotation.

As per another aspect of the present subject matter, the throttle assembly in the third state is capable of being rotated up till a second position that is the upper limit of the throttle assembly when the throttle assembly undergoes the third rotation.

As per another aspect of the present subject matter, the torsional spring of the throttle assembly acts as an additional spring which is assembled between the throttle assembly case holder and the throttle assembly holders. The torsional spring aids in returning the throttle assembly case holder to the first state of the throttle assembly after rotating the throttle assembly in either clockwise direction or in anticlockwise direction.

As per another aspect of the present subject matter, the torsional spring of the throttle assembly is held in position by mounting it on the throttle assembly holders by the means of the torsional spring mounts.

As per another aspect of the present subject matter, the slot of the throttle assembly of the present subject matter is provided on the throttle assembly case holder. The slot aids in the sliding of the torsional spring through the slot, which leads to inactivation of the torsional spring when the rider accelerates the vehicle.

As per another aspect of the present subject matter, the slot of the throttle assembly of the present subject matter is rotated in the clockwise direction which aids in the movement of the torsional spring out of the slot which further activates the torsional spring.

As per another aspect of the present subject matter, the stopper of the throttle assembly of the present subject matter is relieved in a pre-defined region.

As per another embodiment of the present subject matter the throttle assembly controlled regenerative braking is capable of being implemented in all two and three wheeled vehicles.

As per another embodiment of the present subject matter, the throttle assembly controlled regenerative braking is capable of being implemented in all cable based variants across vehicles.

As per another embodiment of the present subject matter, the throttle assembly controlled regenerative braking is capable of being implemented in all sensor based variants across vehicles.

As per another embodiment of the present subject matter, the throttle assembly controlled regenerative braking is capable of being implemented in electric vehicles.

As per another embodiment of the present subject matter, an alert means (visual or audio) is introduced in the vehicle to alert the rider, to indicate the charged battery state to aid the rider to choose between regenerative braking by using the throttle assembly and regular braking by using the brake pedal/lever.

As per another embodiment of the present subject matter, the throttle assembly is capable of having multiple regenerative modes. The rider can choose to operate on a pre-programmed regenerative mode or a user controlled regenerative mode. If the rider selects a pre-programmed regenerative mode, the regeneration controller automatically enables the regenerative braking without manual interference. If the rider selects a user controlled regenerative mode, the regenerative braking is completely achieved manually as explained in the first embodiment of the present subject matter.

As per an aspect of the present embodiment the selection between the usage of the regenerative modes can be integrated to the existing mode selection switches present on the handle bar of the vehicle or can be separately provided as a regenerative mode selection switch.

As per another embodiment of the present subject matter, while in the pre-programmed regenerative mode, if the regenerative controller detects a down gradient in the vehicle, the controller is capable of providing an option to the rider to change to the user controlled regenerative mode.

As per an aspect of the present embodiment the option to change to the user controlled regenerative mode is provided by means of suitable indicating means.

As per an efficacy of the present subject matter the throttle assembly controlled regenerative braking is capable of being controlled by the rider, on need to use basis.

As per an efficacy of the present subject matter, the throttle assembly controlled regenerative braking is capable of being rotated in both clockwise and anticlockwise direction from its neutral position.

As per another efficacy of the present subject matter the throttle assembly controlled regenerative braking is intuitive in nature as the rider can control both the function of controlling the vehicle's speed and braking the vehicle without shifting from throttle assembly to brake lever by using the bifunctional throttle assembly alone.

As per another efficacy of the present subject matter the user controlled regenerative braking ensures that while maneuvering in high traffic conditions, the fatigue to the hand of the rider is reduced as the need for separately applying brake is reduced.

As per another efficacy of the present subject matter the throttle assembly controlled regenerative braking is made more intuitive for the rider since the present subject matter is configured in a manner such that the regenerative brake actuation requires more force to be applied by the rider for closing the throttle assembly as compared to force applied for throttle assembly opening. This requirement of more force during the regenerative braking improves and adds intuition to rider that he is going to do braking making him mentally prepared.

As per another efficacy of the present subject matter, the throttle assembly controlled regenerative braking helps in improving the overall drive feel by aiding in overcoming the feeling of harshness and pitching, which is usually felt in preprogrammed regenerative braking.

As per another efficacy of the present subject matter the throttle assembly controlled regenerative braking aids in achieving improved vehicle stability.

As per another efficacy of the present subject matter the throttle assembly controlled regenerative braking of the present subject matter is achieved by minimum possible constructional modifications in the conventional throttle assembly of the existing vehicles. This provides a hand-operated regenerative control for a vehicle which is relatively easy and inexpensive to make and to assemble in an existing layout of a vehicle making it a versatile retrofit solution for prior vehicles.

The nature and further characteristic features of the present invention will be made clearer from the following descriptions made with reference to the accompanying drawings.

Exemplary embodiments detailing features regarding the aforesaid and other advantages of the present subject matter will be described hereunder with reference to the accompanying drawings. Various aspects of different embodiments of the present invention will become discernible from the following description set out hereunder. Rather, the following description provides a convenient illustration for implementing exemplary embodiments of the invention. Further, it is to be noted that terms "upper", "down", "right", "left", "front", "forward", "rearward", "downward", "upward", "top", "bottom", "exterior", "interior" and like terms are used herein based on the illustrated state or in a standing state of the two wheeled vehicle with a driver riding thereon. Furthermore, arrows wherever provided in the top right corner of figure(s) in the drawings depicts direction with respect to the vehicle, wherein an arrow F denotes front direction, an arrow R indicates rear direction, an arrow Up denotes upward direction, an arrow Dw denotes downward direction, an arrow RH denotes right side, and an arrow LH denotes left side. Also, it is to be understood that the phraseology and terminology used herein is for the purpose of description and should not be regarded as limiting.

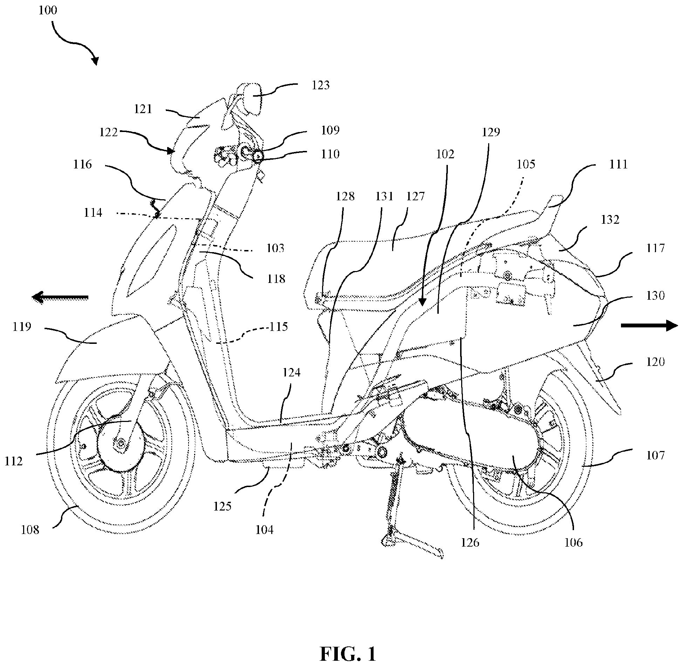

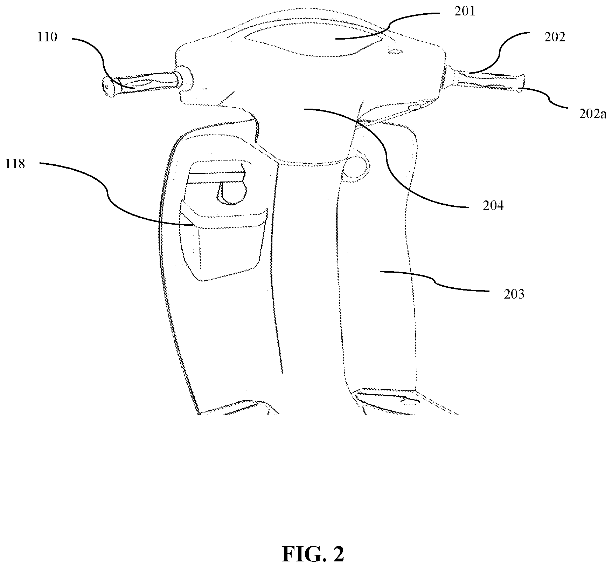

Figure 1 illustrates a side view of a motorized vehicle (100), for example a two wheeled vehicle, when viewed from left hand side of the rider while the rider is in riding position. The vehicle (100) is generally provided with a power assembly (not shown) that generates the power required to propel the vehicle forward. A frame assembly (102), which further includes a front frame (103), a central frame (104) and a rear frame (105) joined together to form the frame assembly (102). A power transmission assembly (106), which transfers the power generated by the power assembly (not shown) to the rear wheel (107), and a front wheel (108) at front portion of the vehicle below the front frame (103) which is steerable by the rider, and a pair of handle bar (109) comprising of a left handle bar grip (110) and a right handle bar grip (not shown) and a throttle assembly (202) (Fig 2) which the rider can use to steer the front wheel (108) in the desired direction. A front suspension assembly (112) is used for smooth force transmission to the front wheel (108), and a rear suspension assembly (not shown for smooth force transmission to the rear wheel (107).

The front frame (103) includes a head tube (114) and a down tube (115); the head tube (114) supports the front suspension assembly (112), which further supports the pair of handle bars (109) in a steerable manner and the down tube (115) extends rearward and downward of the head tube (114). The central frame (104) has two tubes (not shown) on the left and right of the vehicle (100) extending away from each other in a rearward direction. The left and right tubes are connected by a cross frame (not shown) extending in vehicle width direction. These left and right tubes further extend rearward and upward to form the rear frame (105), which supports other assemblies of the vehicle at rear portion.

A front panel (116) is provided ahead of the head tube (114) for covering the head tube (114) when viewed from front of the vehicle (100). A rear panel (203) (Fig 2), extending downwards from the head tube (114), covers the head tube (114) and down tube (115) from the rear side. A front fender (119) is provided above the front wheel (108), in the vicinity of the front suspension assembly (112), to prevent mud splashing onto the internal articles of the vehicle at the front portion. A handle bar rear panel (204) (Figure 2), at least partly covers the pair of handle bars (109), from the rear side. A handle bar front panel (121) at least partly covers the pair of handle bars (109) from front side. A glove box (118) is mounted on the rear panel (203), below the handle bar rear panel (204) and above the floor board (124). A headlamp assembly (122) is disposed on the handle bar front panel (121) and pair of mirror (123) is disposed on the handle bar (109) through the handle bar front panel (121). An interfacing portion of the handle bar front panel (121) and the handle bar rear panel (204) has a cutout zone (not shown) on left side and right side for projecting the left handle bar grip (110) and right handle bar grip (202) (Figure 2) respectively. A floor board (124) as a leg resting panel is provided above the central frame (104) to cover a top portion of the central frame (104) and a bottom panel (125) is provided below the central frame (104) to cover a bottom portion of the central frame (104).

On the rear side, a utility unit (126) is disposed, at the space between the left and right tubes at the rear portion of the vehicle (100) above the power unit (not shown, to store articles. The utility unit (126) is mounted onto the cross tube at the front portion and rear portion, thus getting supported by the rear frame (105). A seat unit (127) is provided, above the utility unit (126) and extending throughout the rear frame (105), for the rider to sit over and maneuver the vehicle (100). The seat unit (127) is mounted onto the vehicle through a hinge unit (128), provided on the utility unit (126), such that the seat can be opened by rotating it about the hinge unit (128) to provide access to the storage area (129) of the utility unit (126).

A side panel LH (130) is provided on the left side of the rear frame (105) and a side panel RH (not shown) is provided on the right side of the rear frame (105) so as to cover the internal components when viewed from left and right sides of the vehicle (100) respectively. A front cover (131) is disposed ahead of the utility unit (126) and below the seat unit (127) to cover the internal components, such as the power assembly (not shown), frame assembly (102) in a vehicle perspective view. A rear cover (132) is provided rearward to the rear frame (105) and an opening formed by assembling the rear cover (132) and the side panel assembly (130, 105) is used to place a tail lamp (117) on the rear side. A rear fender (120) is disposed above the rear wheel (107) to prevent mud splashing onto internal components while riding. A grab rail (111) is disposed in the vicinity of the seat unit (127), on the rear portion of the vehicle (100), to enable a pillion rider to grab for support.

Figure 2 illustrates a rear perspective view of a portion of a motorized vehicle (100) in accordance with an embodiment of the present invention. The rear perspective view of the vehicle (100) includes a handle bar rear panel (204) and a rear panel (203), extending downwards from the head tube (114) (shown in Figure 1), covering the head tube (114) and down tube (115) (shown in Figure 1) from the rear side. A front panel (116) (shown in Figure 1) is provided ahead of the head tube (114) for covering the head tube (114) when viewed from front of the vehicle (100). A one side glove box (118) is placed on a rear panel (203) of the vehicle (100). The handle bar rear panel (204) of the vehicle (100) accommodates a cluster (201) in the middle of the handle bar rear panel (204) and a pair of handle bar (109) (shown in Figure 1) on its right and left side of the handle bar rear panel (204).The hand bar (109) accommodates on its left a left handle bar grip (110) and on its right a throttle assembly (202). The throttle assembly (202) of the vehicle (100) uses a mechanism by which the throttle assembly (202) controls the fluid flow by constriction or obstruction method and thereby controls the power or speed of the power unit (not shown) (shown in Figure 1) (not shown). Thus, the power of the power unit (not shown) can be increased or decreased by the restriction of the inlet gases (by the use of a throttle assembly (202), but usually decreased. The throttle assembly (202) includes an outward end (202a) protruding toward a right side of the vehicle (100).

The throttle assembly (202) of the present invention allows the rider to control both the speed of the vehicle (100) and regenerative braking of the vehicle (100). The throttle assembly (202) of the vehicle (100) as per present invention is configured such that, the throttle assembly (202) is capable of being user controlled by means of angle and speed of rotation of the throttle assembly (202) by the rider on need to use basis. When viewed from the outward end (202a) of the throttle assembly (202), the throttle assembly (202) is capable of being rotated in both clockwise and anticlockwise direction from a neutral throttle position.

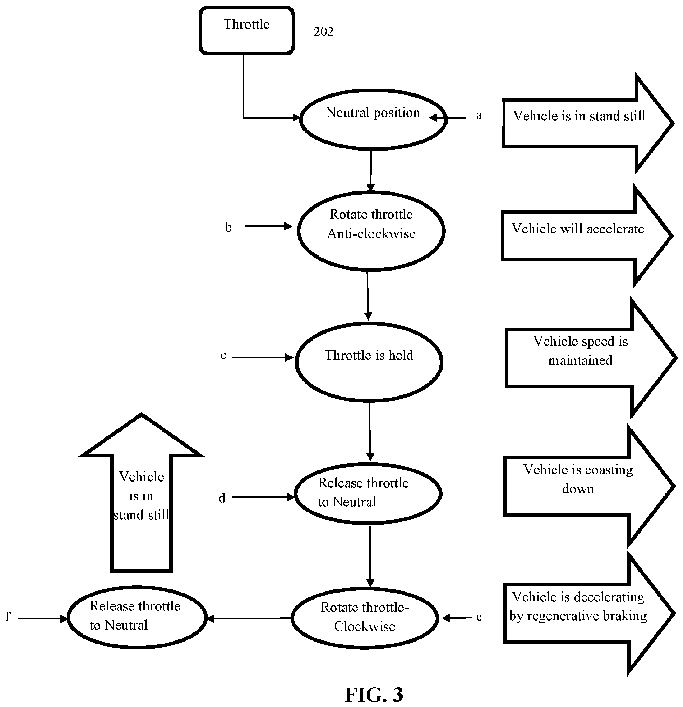

Figure 3 illustrates a working flow chart depicting the mechanism used by the throttle assembly (202) (shown in Figure 2) to provide a user controlled regenerative braking in a motorized vehicle (100) in accordance with an embodiment of the present invention. As per the present embodiment the throttle assembly (202) is capable of providing a set of four rotations, viz. a first rotation, a second rotation, a third rotation, and a fourth rotation. The set of four rotations of the throttle assembly (202) help the rider to control both the speed of the vehicle (100) and the regenerative braking of the vehicle (100) by means of following steps (a to f).

The first rotation of the throttle assembly (202) in an anti-clockwise direction from a neutral position, when viewed from the outward end (202a) of the throttle assembly (202), increases the throttle, while the second rotation of the throttle assembly (202) in a clockwise direction, when viewed from the outward end (202a), towards the neutral position decreases the throttle. Similarly, when viewed from the outward end (202a) of the throttle assembly (202), the third rotation of the throttle assembly (202) in a clockwise direction, when viewed from the outward end (202a), from the neutral position increases the regenerative braking, while the fourth rotation of the throttle assembly (202) in an anti-clockwise direction towards the neutral position decreases the regenerative braking.

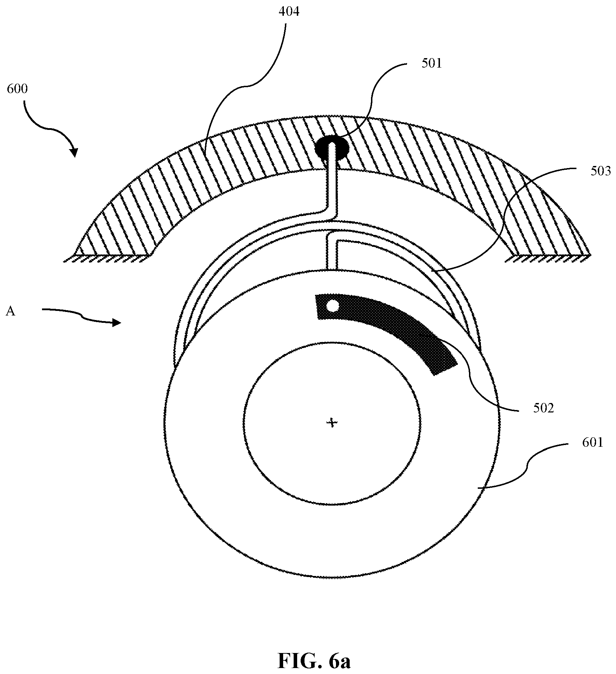

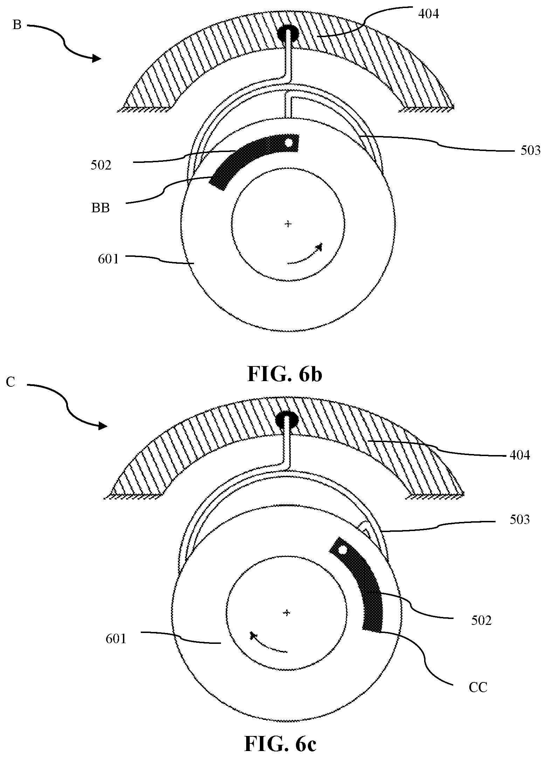

The rotation of the throttle assembly (202) in both the clockwise direction and the anticlockwise direction, when viewed from the outward end (202a), by means of the first rotation, the second rotation, the third rotation and a fourth rotation enables the throttle assembly (202) to be in three states. These three states of the throttle assembly (202) include a first state (A) (shown in Figure. 6a), that is the neutral state of the throttle assembly (202); a second state (B) (shown in Figure. 6b) that is a when the vehicle (100) is in a regular drive mode; and a third state (C) (shown in Figure. 6c) that is when the vehicle (100) is in the user controlled regenerative mode.

The throttle assembly (202) is in the second state (B), that is the vehicle (100) is in the regular drive mode, when the throttle assembly (202) undergoes the first rotation or the second rotation,

The throttle assembly (202) is in the third state (C), that is the vehicle (100) is in the user controlled regenerative mode, when the throttle assembly (202) undergoes the third rotation or the fourth rotation,

Therefore, these three states (A, B, and C) of the throttle assembly (202) provide two modes of operation, viz, the regular drive mode, and the user controlled regenerative mode. Step (a) implies the standstill state of the vehicle (100), when the throttle assembly (202) of the vehicle (100) is in neutral position which is the first state (A) of the throttle assembly (202).

Step (b) involves rotating the throttle assembly (202) in an anti-clockwise, direction when viewed from the outward end (202a) of the throttle assembly (202). In order to achieve a regular drive mode in which the speed of the vehicle (100) is increased by the rider when the rider rotatably moves or opens the throttle assembly (202) in an anti-clock wise direction (303).The rider actuates the throttle assembly in the range of positions from the first state (A) of the throttle assembly (202) up to the upper possible limit of the throttle assembly (202) in an anti-clock wise direction, a first position (BB) (shown in Figure 6b) of the throttle assembly (202).

In Step (c) in order to maintain the acceleration and thereby speed of the vehicle (100), the throttle assembly (202) is capable of being held in any position present in between the first state (A) and the first position (BB) of the throttle assembly (202), as per the need to use basis.

Further, as per Step (d) according to need to use basis the coasting down of the vehicle (100) is done by rotatably moving the throttle assembly (202) in a clockwise direction, or simply by releasing the throttle until the first state (A) that is the neutral position of the throttle assembly (202) is reached.

Further in Step (e) as per need to use basis, the rider can apply regenerative braking by rotatably moving the throttle assembly (202) in clockwise direction beyond the first state (A) to reach to the upper possible limit of the throttle assembly (202) in the clock wise direction, which is the second position (CC). The vehicle (100) decelerates in gradual manner with rotation of the throttle assembly (202) up to the upper possible limit, which is the second position (CC). The gradual deceleration of the vehicle (100) aids in achieving regenerative braking by the rider without using brake pedal or lever (not shown) as per need to use basis.

As described by Step (f), if the vehicle (100) is maintained at the second position (CC) of the throttle assembly (202), for a long period of time, it results in stopping of the vehicle (100) bringing it to a standstill state. Post which, upon the release of the throttle assembly (202) by the rider, the throttle assembly (202) returns back to the first state (A) because of its configuration.

When the rider decides to go beyond the first state (A) of the throttle assembly (202) in the clockwise direction, a transition is made from the first state (A) of the throttle assembly (202) towards the second position (CC). Beyond the first state (A) the regeneration kicks-in at a higher magnitude as per the degree of rotation and as per the speed at which it is rotated. The rotation of the throttle assembly (202) from first state (A) of the throttle assembly (202) to the second position (CC) is completely based on the need to use basis and is under full control of the rider.

Therefore, effectively, a regular drive mode is achieved between the first state (A) of the throttle assembly (202) and the first position (BB) of the throttle assembly (202), and a user controlled regenerative mode is actuated between the first state (A') of the throttle assembly (202) and the second position (CC) of the throttle assembly (202).

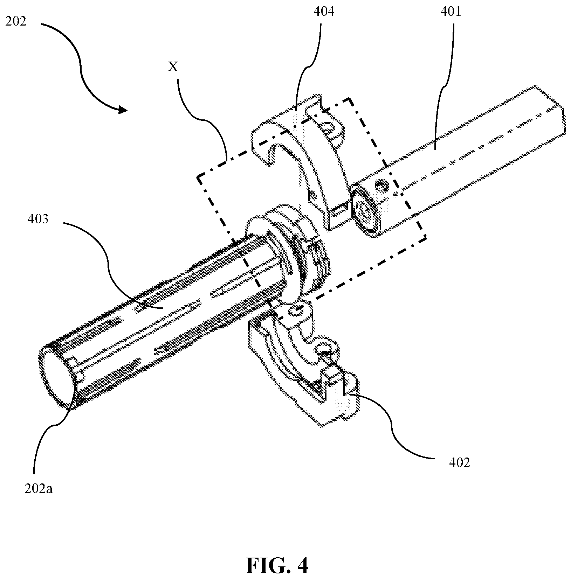

Figure 4 illustrates a partial exploded view of a throttle assembly (202) of a motorized vehicle (100), exemplifying the constructional changes from an existing conventional throttle assembly (not shown) to provide both preprogrammed and user controlled regenerative braking in a vehicle (100) in accordance with an embodiment of the present invention. The throttle assembly (202) includes a handle bar (401), a first throttle assembly holder (402), a throttle assembly case holder (403), a second throttle assembly holder (404).

The handle bar (401) is the stationary element of the throttle assembly (202) on which the throttle assembly case holder (403) is mounted. The throttle assembly case holder (403), is a rotating part of the throttle assembly (202), usually plastic. The throttle assembly case holder (403) aids in pulling the throttle assembly cable (not shown) in cable based variants of the vehicle (100) or can engage any rotary actuator or sensor in case of a drive-by-wire throttle device. The first throttle assembly holder (402) and the second throttle assembly holder (404) aids in holding the throttle assembly case holder (403) and the handle bar (401) together bi-directionally.

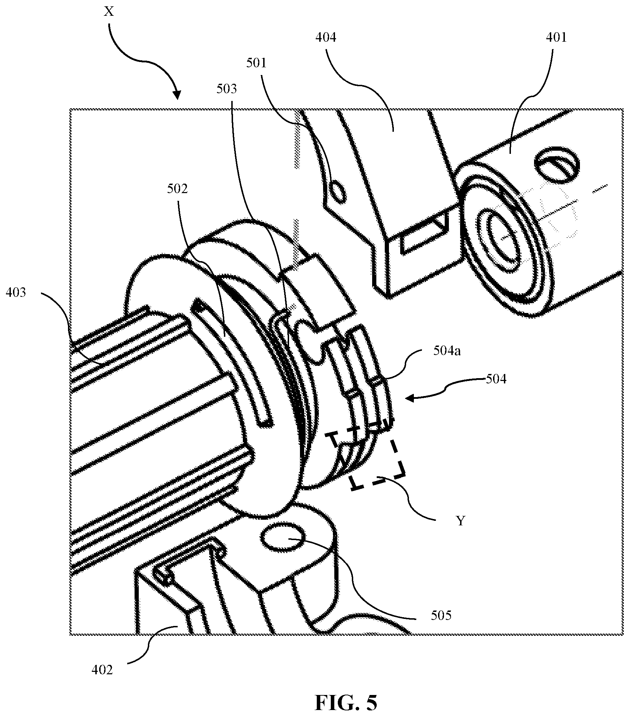

The demarked first region (X) of the Figure 4 is further described in Figure 5 exemplifying the constructional differences from an existing conventional throttle assembly (not shown) to provide user controlled regenerative braking in a vehicle (100) in accordance with an embodiment of the present invention.

Figure 5 illustrates an enlarged view of the first region (X) (shown in Figure 4) of the throttle assembly (202) of a motorized vehicle (100), exemplifying the constructional differences from an existing conventional throttle assembly (not shown) in accordance with an embodiment of the present invention.

The first region(X) (shown in Figure 4) includes a slot (502), a bidirectional torsional spring (503), a first torsional spring mount (501), a second torsional spring mount (505), a stopper ring (504) and a second region (Y).

The torsional spring (503) is an additional spring provided in the present subject matter which is assembled between the throttle assembly case holder (403) and the first throttle assembly holder (402) and the second throttle assembly holder (404). The torsional spring (503) aids in returning the throttle assembly case holder (403) to the first state (A) (shown in Figure6a) of the throttle assembly (202) after rotating in either clockwise direction or anticlockwise direction.

As per an alternate embodiment, thee torsional spring (503) may be replaced with any other elastic member configuration to enable return of the throttle assembly (202) (shown in Figure 4) to a desired position.

The torsional spring (503) is held in position by being mounted on the first and second throttle assembly holders (402, 404) by the means of the first torsional spring mount (501), and the second torsional spring mount (505) respectively. The first and second torsional spring mount (501, 505) are the provisions present on the first and second throttle assembly holders (402, 404) respectively, which are used to hold at least one end of the torsional spring (503). The addition of the torsional spring (503) brings in a torque resisting force in a direction opposite to the torque applied by the user and this opposite torque aids in adding intuition or feedback feel to the rider especially to provide tactile feel that he has entered into regenerative mode of the throttle assembly (202). This intuition is significant because a higher resisting torque or force is applied on the user when the throttle assembly enters the third state (C) and moves towards the second position (CC) (shown in Figure 6c) of the throttle assembly (202) from the first state (A) (shown in Figure 6a) of the throttle assembly (202), as compared to other positional transitional phase of the throttle assembly (202).

At least a slot (502) is provided on the throttle assembly case holder (403). The slot (502) aids in the sliding of the torsional spring (503) through the slot (502), which leads to inactivation or decoupling of the torsional spring (503) when the rider accelerates the vehicle (100) during the second state (B) (shown in Figure 6b) of the throttle assembly (202) while moving towards the first position (BB) (shown in Figure 6b) of the throttle assembly (202) from the first state (A) (shown in Figure 6a) of the throttle assembly (202). This helps in non-interference of the regenerative braking mode of the throttle assembly (202) with the regular drive mode.

However, when the throttle assembly (202) is rotated in the clockwise direction, the slot (502) aids in the movement of the torsional spring (503) out of the slot (502) which further activates the torsional spring (503). Therefore the slot (502) is used for relieving the torsional spring (503) during throttle assembly opening and is used to hold the torsional spring (503) when the throttle assembly (202) (shown in Figure 2) is turned beyond the first state (A)(shown in Figure6a), i.e., when the throttle assembly (202) is in the third state (C) both in clockwise and anticlockwise direction.

The stopper ring (504) is provided in between the throttle assembly case holder (403) and the first and the second throttle assembly holders (402, 404). As compared to the conventional throttle assembly (not shown), the present throttle assembly (202) has the stopper ring (504) which has a pre-defined second region (Y) where a stopper (504a) is relieved. Therefore, in conventional throttle assembly (not shown) the stoppers (504a) present on the stopper ring (504) are comparatively more as compared to the stoppers present on the stopper ring (504) of the present subject matter. The lesser number of stoppers (504a) , specifically the stopper (504a) relieved in the second region (Y) aid in comfortable rotation of the throttle assembly case holder (403) in the clockwise direction with respect to the first state (A) (shown in Figure 6a-) of the throttle assembly (202).

This construction of the slot (502), the torsional spring (503) and the relieving of the stopper (504a) in the second region (Y) of the stopper ring (504) makes the throttle assembly (202) of the present subject matter as an improved throttle assembly (202). This enables the movement of the throttle assembly (202) between the first state (A) and the second position (CC) (shown in Figure6a- Figure 6c), which was not possible in a conventional throttle assembly (not shown).

Figure 6a to Figure 6c illustrates the three throttle assembly states (A, B, C) of a motorized vehicle (100) with help of a throttle assembly cross section (600) in accordance with an embodiment of the present invention.

The present embodiment provides three throttle assembly states (A, B, C) which help the rider to control both the speed of the vehicle (100) and the regenerative braking of the vehicle (100).

The three throttle assembly states (A,B,C) include a neutral position when the throttle assembly (202) is at its first state (A), a second state (B) that is a when the vehicle (100) is in the regular drive mode; and a third state (C) that is when the vehicle (100) is in the user controlled regenerative mode.

The throttle assembly (202) is in the second state (B), that is the vehicle is in the regular drive mode, when the throttle assembly (202) undergoes the first rotation or the second rotation. During the second state (B) of the throttle assembly (202), the throttle assembly (202) is capable of being anywhere between the first state (A) of the throttle assembly (202) and first position (BB) of the throttle assembly (202).

The throttle assembly (202) is in the third state (C), that is the vehicle is in the user controlled regenerative mode when the throttle assembly (202) undergoes the third rotation or the fourth rotation. During the third state (C) of the throttle assembly (202), the throttle assembly (202) is capable of being anywhere between the first state (A) of the throttle assembly (202) and second position (CC) of the throttle assembly (202).
- The throttle assembly cross section (600) includes a second throttle assembly holder (404), a first torsional spring mount (501), a torsional spring (503), a slot (502) and, a throttle assembly case holder cross section (601). The slot (502) is provided on the throttle assembly case holder cross section (601). The torsional spring (503) is mounted in between the throttle assembly case holder cross section (601) and the first torsional spring mount (501). One end of the torsional spring (503) is mounted on the second throttle assembly holder (404) by means of the first torsional spring mount (501). The second end of the torsional spring (503) is held by the slot (502) on the throttle assembly case holder cross section (601) area.

In the first state (A) of the throttle assembly (202) (shown in Figure 2), the vehicle (100) is in standstill state and the slot (502) formed on the throttle assembly case holder cross section area (601) is in line with the torsional spring (503) at a pre-defined position. The throttle assembly case holder cross section area (601) is capable of being rotatably movable in both clockwise and anti-clockwise direction, from the first state (A) of the throttle assembly (202).

The throttle assembly (202) enters the second state (B), when the rider moves the throttle assembly (202) in an anti-clockwise direction, and thus accelerates the vehicle (100). The slot (502) aids in the sliding of the torsional spring (503) through the slot (502), which leads to inactivation of the torsional spring (503) when the rider accelerates the vehicle (100), thus achieving non - interference of the regenerative braking mode of the throttle assembly (202) with the regular drive mode.

The throttle assembly (202) enters the third state (C), when the throttle assembly (202) is rotated in the clockwise direction. Then the trailing end of the slot (502) aids in the movement or tensioning of the torsional spring (503).

Therefore the slot (502) is used for relieving the torsional spring (503) during throttle assembly rotation and is used to engage the torsional spring (503) when the throttle assembly (202) enters the third state (C) and is rotated either in in clockwise and anti-clock wise direction between first state (A) of the throttle assembly (202) and the upper limit (CC) of the third state (C) of the throttle assembly (202), a throttle assembly controlled regenerative braking can be achieved on need to use basis, giving the full control of the regenerative braking to the rider.

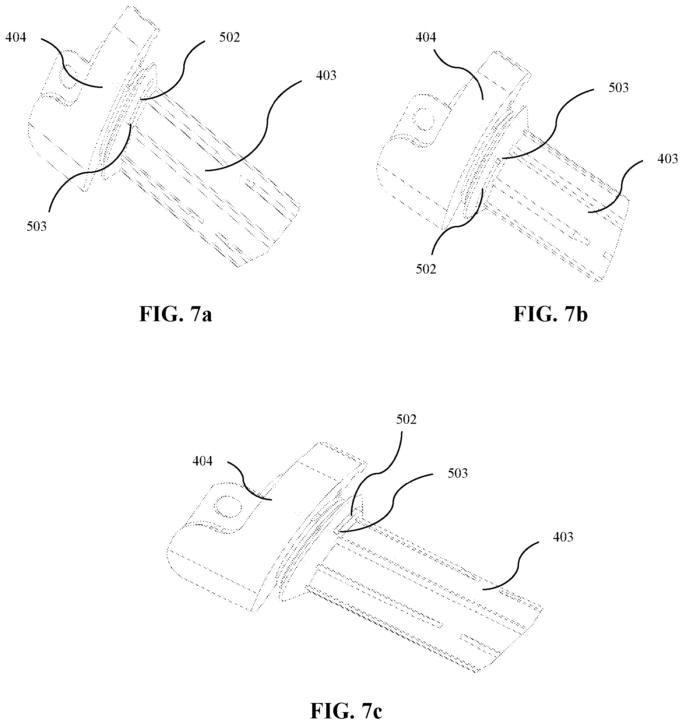

Figure 7a to Figure 7c illustrates the slot (502) engagement with the torsional spring (503) when the throttle assembly (202) is in any of the three throttle assembly states (A, B, C) of a motorized vehicle (100) in accordance with an embodiment of the present invention.

When the vehicle (100) is in its resting phase or when the throttle assembly (202) of the vehicle (100) is not used by the rider then the torsional spring (503) of the throttle assembly (202) is present at one end i.e. trailing end of the slot (502) of the throttle assembly (202). This positioning of the throttle assembly (202) is the first state (A).

When the rider rotates the throttle assembly case holder (403) in an anticlockwise direction to accelerate the vehicle (100) and enters the second state (B) as provided by the throttle assembly case holder (403) in the anti-clockwise direction up to the upper limit (BB) of the throttle assembly second state (B), the engaging end of the torsional spring (503) slides relative to the slot (502), when the slot (502) along with the throttle assembly case holder (403) moves in the anti-clockwise direction.

Gradually when the rider brings the throttle assembly case holder (403) back to the throttle assembly first state (A) from the throttle assembly second position (B), the torsional spring (503) slides through the slot (502), when the slot (502) along with the throttle assembly case holder (403) rotates in the clockwise direction to reach from the throttle assembly second state (B) to the throttle assembly first state (A).

When the rider wishes to opt for a user controlled regenerative mode to slow down the vehicle (100). The rider rotates the throttle assembly case holder (403) in a clockwise direction and enters the third state (C) and with further rotation is capable of reaching to the upper limit (CC) of the throttle assembly (202) of the third state (C) as provided by the throttle assembly case holder (403) in the clockwise direction. In such scenario, in order to go beyond the throttle assembly first state (A) the rider needs to apply an extra force against the force of the torsional spring (503).

During this process of the clockwise movement of the throttle assembly case holder (403), the engaging end of the torsional spring (503) slides in unison along with the slot (502), when the slot (502) along with the throttle assembly case holder (403) moves in the clockwise direction.

Gradually when the rider releases the throttle assembly case holder (403) from the third state (C) of the throttle assembly (202), the opposing force of the torsional spring (503) moves the throttle assembly case holder (403) back to the throttle assembly (202) first state (A) in an anti-clock wise direction. With this movement of the throttle assembly case holder (403) comes back to the throttle assembly (202) first state (A) and the engaging end of the torsional spring (503) also moves along with the slot (502) to reach to the position where it is positioned in the first state (A) of the throttle assembly (202).

The extra applied force by the rider while rotating the throttle assembly case holder (403) in a clockwise direction to reach to the upper limit (CC) of the throttle assembly, aids in providing tactile feedback as well as reminding the rider that he is entering into user controlled regenerative mode of the vehicle (100). Thus making him intuitively ready to control the vehicle in user controlled regenerative mode.

In an alternate embodiment, the elastic member like torsional spring can be mounted onto the throttle assembly case holder (403) with a predetermined magnitude of pre-load. This preload ensures all time positive abutment of the engaging end of the elastic member with the trailing end of the slot. Such a configuration will provide an assisting torque in the clockwise direction during throttle actuation which can greatly reduce the throttle fatigue load on the rider's arm or wrist. In case of a drive-by-wire design, this embodiment will need an additional secondary elastic member to ensure positive return of the throttle to the neutral position while overcoming the assisting torque of the primary elastic member.

Many modifications and variations of the present subject matter are possible in the light of above disclosure.

### LIST OF REFERENCE NUMERALS

100: vehicle
102: Frame assembly
103: Front frame
104: Central frame
105: Rear frame
106: Power transmission assembly
107: Rear wheel
108: Front wheel
109: Handle bar
110: Left handle bar grip
111: Grab rail
112: Front suspension assembly
114: Head tube
115: Down tube
116: Front panel
117: Tail lamp
118: Glove box
119: Front fender
120: Rear fender
121: Handle bar front panel
122: Head light
123: Mirror unit
124: Floor board
125: Bottom panel
126: Utility unit
127: Seat unit
128: Hinge unit
129: Storage area utility assembly
130: Side panel LH
131: Front cover
132: Rear cover
201: Cluster
202: Throttle assembly
202a: Outward end
203: Rear panel
204: Handle bar rear panel
401: Handle bar (RH Side)
402: First throttle assembly holder
403: Throttle assembly case holder
404: Second throttle assembly holder
X: Region on throttle assembly
501: First torsional spring mount
502: Slot
503: Torsional spring
504: Stopper ring
504a: Stopper
505: Second torsional spring mount
Y: Stopper relieved region
A: First state
B: Second state
C: Third state
AA: first position
BB: second position
600: Throttle assembly cross section
601: Throttle assembly case holder cross section

## Claims

1. A motorized vehicle (100) comprising:
a throttle assembly (202),
said throttle assembly (202) including an outward end (202a) protruding towards a right side of said motorized vehicle (100),
said throttle assembly (202) having a plurality of states comprising a first state (A), a second state (B), and a third state (C),
wherein said throttle assembly (202) is configured to rotate in an anti-clockwise direction when viewed from the outward end (202a), from said first state (A) to said second state (B), and
said throttle assembly (202) is configured to rotate in a clockwise direction when viewed from the outward end (202a), from said first state (A) to said third state (C),
**characterized in that** said throttle assembly (202) includes a slot (502) and a spring (503),
said spring (503) being configured to engage with said slot (502) when moved in a clockwise direction when viewed from the outward end (202a) of said throttle assembly (202), and
said spring (503) being configured to relieve from said slot (502), when moved in an anti-clockwise direction when viewed from the outward end (202a) of said throttle assembly (202).

2. The motorized vehicle (100) as claimed in claim 1, wherein
said throttle assembly (202) is configured to include a plurality of rotations comprising a first rotation, a second rotation, a third rotation, and a fourth rotation.

3. The motorized vehicle (100) as claimed in claim 2, wherein
said first rotation of said throttle assembly (202) includes rotating said throttle assembly (202) from said first state (A) to said second state (B).

4. The motorized vehicle (100) as claimed in claim 2, wherein
said second rotation of said throttle assembly (202) includes rotating said throttle assembly (202) from said second state (B) to said first state (A).

5. The motorized vehicle (100) as claimed in claim 2, wherein
said third rotation of said throttle assembly (202) includes rotating said throttle assembly (202) from said first state (A) to said third state (C).

6. The motorized vehicle (100) as claimed in claim 2, wherein
said fourth rotation of said throttle assembly (202) includes rotating said throttle assembly (202) from said third state (C) to said first state (A).

7. The motorized vehicle (100) as claimed in claim 1, wherein
said throttle assembly (202) includes a throttle assembly case holder (403), a stopper (504a), and a stopper ring (504).

8. The motorized vehicle (100) as claimed in claim7, wherein
said stopper (504a) of said stopper ring (504) is relieved in a second region (Y) of said throttle assembly (202).

9. The motorized vehicle (100) as claimed in claim 1, wherein
said slot (502) is formed on a throttle assembly case holder (403).

10. The motorized vehicle (100) as claimed in claim 1, wherein
said spring (503) is assembled between a throttle assembly case holder (403) and a one or more throttle assembly holder (402, 404).

11. The motorized vehicle (100) as claimed in claim 7, wherein
said stopper ring (504) is disposed between said throttle assembly case holder (403) and one or more throttle assembly holders (402, 404).

12. The motorized vehicle (100) as claimed in the claim 1, wherein
an alert means is included in said motorized vehicle (100).

13. The motorized vehicle (100) as claimed in the claim 7, wherein
an elastic member is mounted onto said throttle assembly case holder (403) with a pre-load.

## Patentansprüche

1. Kraftfahrzeug (100), aufweisend:
eine Fahrhebelanordnung (202),
wobei die Fahrhebelanordnung (202) ein äußeres Ende (202a) aufweist, das zur rechten Seite des motorisierten Fahrzeugs (100) hin vorragt,
wobei die Fahrhebelanordnung (202) eine Vielzahl von Zuständen hat, inbegriffen einen ersten Zustand (A), einen zweiten Zustand (B) und einen dritten Zustand (C),
wobei die Fahrhebelanordnung (202) gegen den Uhrzeigersinn, vom äußeren Ende (202a) aus gesehen, vom ersten Zustand (A) zum zweiten Zustand (B) drehbar ist, und
die Fahrhebelanordnung (202) im Uhrzeigersinn, vom äußeren Ende (202a) aus gesehen, vom ersten Zustand (A) in den dritten Zustand (C) drehbar ist,
**dadurch gekennzeichnet, dass** die Fahrhebelanordnung (202) einen Schlitz (502) und eine Feder (503) beinhaltet,
wobei die Feder (503) dazu eingerichtet ist, bei Bewegung im Uhrzeigersinn, vom äußeren Ende (202a) der Fahrhebelanordnung (202) aus gesehen, in den Schlitz (502) einzugreifen, und
wobei die Feder (503) dazu eingerichtet ist, bei Bewegung gegen den Uhrzeigersinn, vom äußeren Ende (202a) der Fahrhebelanordnung (202) aus gesehen, sich von dem Schlitz (502) zu lösen.

2. Kraftfahrzeug (100) nach Anspruch 1, wobei
die Fahrhebelanordnung (202) mit einer Vielzahl von Drehungen eingerichtet ist, inbegriffen eine erste Drehung, eine zweite Drehung, eine dritte Drehung und eine vierte Drehung.

3. Kraftfahrzeug (100) gemäß Anspruch 2, wobei
die erste Drehung der Fahrhebelanordnung (202) Drehen der Fahrhebelanordnung (202) aus dem ersten Zustand (A) in den zweiten Zustand (B) enthält.

4. Kraftfahrzeug (100) gemäß Anspruch 2, wobei
die zweite Drehung der Fahrhebelanordnung (202) Drehen der Fahrhebelanordnung (202) aus dem zweiten Zustand (B) in den ersten Zustand (A) enthält.

5. Kraftfahrzeug (100) nach Anspruch 2, wobei
die dritte Drehung der Fahrhebelanordnung (202) Drehen der Fahrhebelanordnung (202) aus dem ersten Zustand (A) in den dritten Zustand (C) enthält.

6. Kraftfahrzeug (100) nach Anspruch 2, wobei
die vierte Drehung der Fahrhebelanordnung (202) Drehen der Fahrhebelanordnung (202) aus dem dritten Zustand (C) in den ersten Zustand (A) enthält.

7. Kraftfahrzeug (100) nach Anspruch 1, wobei
die Fahrhebelanordnung (202) einen Gehäusehalter (403) der Fahrhebelanordnung, einen Anschlag (504a) und einen Anschlagring (504) beinhaltet.

8. Kraftfahrzeug (100) nach Anspruch 7, wobei
der Anschlag (504a) des Anschlagrings (504) in einem zweiten Bereich (Y) der Fahrhebelanordnung (202) freigegeben ist.

9. Kraftfahrzeug (100) gemäß Anspruch 1, wobei
der Schlitz (502) auf einem Gehäusehalter (403) der Fahrhebelanordnung ausgebildet ist.

10. Kraftfahrzeug (100) gemäß Anspruch 1, wobei
die Feder (503) zwischen einem Gehäusehalter (403) der Fahrhebelanordnung und einem oder mehreren Haltern (402, 404) der Fahrhebelanordnung angebracht ist.

11. Kraftfahrzeug (100) gemäß Anspruch 7, wobei
der Anschlagring (504) sich zwischen dem Gehäusehalter (403) der Fahrhebelanordnung und einem oder mehreren Haltern (402, 404) der Fahrhebelanordnung befindet.

12. Kraftfahrzeug (100) gemäß Anspruch 1, wobei
eine Warnvorrichtung in dem Kraftfahrzeug (100) enthalten ist.

13. Kraftfahrzeug (100) gemäß Anspruch 7, wobei
ein elastisches Element auf dem Gehäusehalter (403) der Fahrhebelanordnung mit einer Vorspannung angebracht ist.

## Revendications

1. Véhicule motorisé (100) comportant :
un ensemble d'accélérateur (202),
ledit ensemble d'accélérateur (202) comprenant une extrémité extérieure (202a) faisant saillie vers un côté droit dudit véhicule motorisé (100),
ledit ensemble d'accélérateur (202) ayant une pluralité d'états comprenant un premier état (A), un deuxième état (B), et un troisième état (C),
ledit ensemble d'accélérateur (202) étant configuré pour tourner dans le sens antihoraire vu de l'extrémité extérieure (202a) dudit premier état (A) audit deuxième état (B), et
ledit ensemble d'accélérateur (202) étant configuré pour tourner dans le sens horaire vu de l'extrémité extérieure (202a), dudit premier état (A) audit troisième état (C),
**caractérisé en ce que** ledit ensemble d'accélérateur (202) inclut une fente (502) et un ressort (503),
ledit ressort (503) étant configuré pour s'engager avec ladite fente (502) lorsqu'il est fait tourné dans le sens horaire vu de l'extrémité extérieure (202a) dudit ensemble d'accélérateur (202), et
ledit ressort (503) étant configuré pour se dégager de ladite fente (502) lorsqu'il est fait tourné dans le sens antihoraire vu de l'extrémité extérieure (202a) dudit ensemble d'accélérateur (202).

2. Véhicule motorisé (100) selon la revendication 1, dans lequel ledit ensemble d'accélérateur (202) est configuré pour inclure une pluralité de rotations comprenant une première rotation, une deuxième rotation, une troisième rotation et une quatrième rotation.

3. Véhicule motorisé (100) selon la revendication 2, dans lequel
ladite première rotation dudit ensemble d'accélérateur (202) inclut la rotation dudit ensemble d'accélérateur (202) dudit premier état (A) audit deuxième état (B).

4. Véhicule motorisé (100) selon la revendication 2, dans lequel
ladite deuxième rotation dudit ensemble d'accélérateur (202) inclut la rotation dudit ensemble d'accélérateur (202) dudit deuxième état (B) audit premier état (A).

5. Véhicule motorisé (100) selon la revendication 2, dans lequel
ladite troisième rotation dudit ensemble d'accélérateur (202) inclut la rotation dudit ensemble d'accélérateur (202) dudit premier état (A) audit troisième état (C).

6. Véhicule motorisé (100) selon la revendication 2, dans lequel
ladite quatrième rotation dudit ensemble d'accélérateur (202) inclut la rotation dudit ensemble d'accélérateur (202) dudit troisième état (C) audit premier état (A).

7. Véhicule motorisé (100) selon la revendication 1, dans lequel
ledit ensemble d'accélérateur (202) inclut un support de boîtier d'ensemble d'accélérateur (403), un arrêt (504a) et une bague d'arrêt (504).

8. Véhicule motorisé (100) selon la revendication 7, dans lequel
ledit arrêt (504a) de ladite bague d'arrêt (504) est dégagé dans une deuxième région (Y) dudit ensemble d'accélérateur (202).

9. Véhicule motorisé (100) selon la revendication 1, dans lequel
ladite fente (502) est formée sur un support de boîtier d'ensemble d'accélérateur (403).

10. Véhicule motorisé (100) selon la revendication 1, dans lequel
ledit ressort (503) est assemblé entre un support de boîtier d'ensemble d'accélérateur (403) et un ou plusieurs supports d'ensemble d'accélérateur (402, 404).

11. Véhicule motorisé (100) selon la revendication 7, dans lequel
ladite bague d'arrêt (504) est disposée entre ledit support de boîtier d'ensemble d'accélérateur (403) et un ou plusieurs supports d'ensemble d'accélérateur (402, 404).

12. Véhicule motorisé (100) selon la revendication 1, dans lequel
un moyen d'alerte est inclus dans ledit véhicule motorisé (100).

13. Véhicule motorisé (100) selon la revendication 7, dans lequel
un élément élastique est monté sur ledit support de boîtier d'ensemble d'accélérateur (403) avec une précharge.
